(19) Europäisches Patentamt / European Patent Office / Office européen des brevets

(11) **EP 3 555 867 B1**

(12) **EUROPEAN PATENT SPECIFICATION**

(45) Date of publication and mention
of the grant of the patent:
**17.06.2026 Bulletin 2026/25**

(21) Application number: **17829704.0**

(22) Date of filing: **18.12.2017**

(51) International Patent Classification (IPC):
***G07C 9/00*** (2020.01)

(52) Cooperative Patent Classification (CPC):
**G07C 9/00309; G07C 9/00571;** G07C 9/00857;
G07C 2209/63

(86) International application number:
**PCT/IB2017/058048**

(87) International publication number:
**WO 2018/116119 (28.06.2018 Gazette 2018/26)**

(54) **SYSTEM FOR ELECTRONIC ACCESS CONTROL**

SYSTEM ZUR ELEKTRONISCHEN ZUGANGSKONTROLLE

SYSTÈME DE CONTRÔLE D'ACCÈS ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2016 IT 201600127847**

(43) Date of publication of application:
**23.10.2019 Bulletin 2019/43**

(73) Proprietor: **Blueticketing SRL
20121 Milano (IT)**

(72) Inventor: **COLOMBO, Gianluca
21018 Sesto Calende (IT)**

(74) Representative: **Modiano, Micaela Nadia et al
Modiano & Partners
Via Meravigli, 16
20123 Milano (IT)**

(56) References cited:
EP-A1- 1 568 834        EP-A1- 3 073 284
US-A1- 2016 055 692        US-A1- 2016 066 254
US-A1- 2016 086 400        US-A1- 2016 163 137

**Description**

The present invention relates to a system for electronic access control particularly but not exclusively useful and practical in the field of the control and management of accesses (or admissions) of a more or less large number of users to the interior of reserved or otherwise conditional-access services or locations, related for example to museums, exhibitions, sports facilities, public transportation systems, ascent facilities and pedestrian conveyors, concerts and events in general, which provide for a step of recognition upon admission of the guest user who owns an admission ticket or a personal invitation.

Systems for electronic access control are currently known which are based on personal access credentials carried by users by means of traditional identification media, such as for example magnetic strip cards, bar codes, memory cards or smart cards which are contact-based or based on RFID (Radio-Frequency IDentification) proximity, or by means of the use of mobile processing devices, such as for example smartphones or tablets, provided within NFC (Near Field Communication) modules.

In most known systems for electronic access control, the user must rest the medium with the personal access credentials that he/she owns on a corresponding reader that is comprised in the barrier, in order to be able to obtain the opening of the barrier and consequently obtain access to the reserved area or location.

In other known systems for electronic access control, remote reading of the media with the personal access credentials is instead also possible, such as for example by using passive RFID proximity smart cards, which can be read from a distance of up to approximately 50 centimeters by means of a corresponding reader and therefore do not set particular constraints or limitations of approach or pairing between the user and the barrier.

However, these known systems for electronic access control of the traditional type are not free from drawbacks, which include the fact that the user often is required to own a dedicated physical identification medium, such as for example an access smart card, and this factor tends to hinder the spread of purely online or similar accreditation or ticketing services, since it is necessary to physically deliver the smart card to the user at least once prior to first use.

Systems for electronic access control are currently also known which do not use a dedicated physical identification medium and provide for access based on biometric parameters (fingerprint recognition, iris recognition, face recognition, hand blood vessel pattern recognition, etc.).

However, even these known systems for electronic access control without dedicated physical identification medium are not free from drawbacks, which include the fact that they are difficult to use, especially in the field of the ticketing of services open to the public, due to technological factors (for example, the recognition of an individual is not inherently 100% reliable) and due to factors linked to user privacy and to currently applicable statutory provisions. Furthermore, the first recognition of the user must be made at a station capable of detecting the biometric parameter of interest, and this is generally a complex procedure which requires time.

Other known systems for electronic access control that have recently been conceived but are for now scarcely widespread are based on BLE technology (Bluetooth Low Energy, also known as Bluetooth Smart).

BLE technology is an extension of the Bluetooth protocol that is present from version 4.0 and is by now integrated in the vast majority of commercially available mobile devices (smartphones, tablets, etc.). BLE technology is based on the periodic emission of packets of very low intensity, and therefore with very low energy consumption, and is used for example to announce remotely the availability of services in the area in which the user is located.

The advantage of BLE technology is that a preliminary pairing process, which obviously requires time and resources, is not necessary for communication between two mobile devices (host and client), as instead occurs in the original Bluetooth technology.

However, even these known systems for electronic access control of the Bluetooth or BLE type are not free from drawbacks, which include the fact that it is not possible to distinguish reliably a first user who appears before a barrier from a second user who is queuing behind or to the side of the first one, unless the latter is forced to place the Bluetooth or BLE technology identification medium on the corresponding reader.

Since these known systems are based simply on the intensity of the Bluetooth or BLE signal, a voluntary gesture of this type is the only way to discriminate between the first user in front of the barrier and the second user who is behind him/her or to his/her side.

The intensity of the Bluetooth or BLE signal is in fact a highly variable data item and is subject to even large measurement errors; it is sufficient to consider that the relative position between the emitter and the receiver, the presence or not of obstacles, the clothing of the user, the quality of the emission antenna (which is not always known) are only some of the factors that lead to a high variability of the intensity of the Bluetooth or BLE signal.

The variability of the intensity of the Bluetooth or BLE signal can be eliminated only by setting indeed a very high level discrimination, in practice forcing the user to place the emitter on the receiver in order to identify himself.

The aim of the present invention is to overcome the limitations of the background art described above, devising a system for electronic access control that allows to detect the personal access credentials of a user from the mobile processing device that he/she owns, allowing (or preventing) access to the user without requiring his/her intervention and without using any physical identification medium.

US 2016/163137 discloses a system for electronic control access and US 2016/055692 discloses how to establish the position of a mobile device relatively to an access control system.

Within this aim, an object of the present invention is to conceive a system for electronic access control that allows automatically and reliably to distinguish the user at a barrier from the other users in his/her vicinity, allowing (or preventing) access only to the user at the barrier.

Another object of the present invention is to devise a system for electronic access control that allows to check the personal access credentials without the user having to perform operations during barrier crossing.

Another object of the present invention is to conceive a system for electronic access control that allows (or prevents) user access even in the absence of a connection to a telematic communication network, such as for example the Internet.

Another object of the present invention is to devise a system for electronic access control that allows to distinguish a plurality of users arranged on a plurality of rows along a plurality of lanes, a situation which occurs often for example in accesses to subways, sports facilities, museums, movie theaters, and so forth.

Another object of the present invention is to devise a system for electronic access control that is easy to use, especially in the field of ticketing services open to the public, overcoming any technological and/or statutory limitations.

A still further object of the present invention is to provide a system for electronic access control that is highly reliable, relatively simple to provide, and at competitive costs if compared with the background art.

This aim, and these and other objects which will become better apparent hereinafter, are achieved by a system for electronic access control, as defined in claim 1.

Further characteristics and advantages of the invention will become better apparent from the description of a preferred but not exclusive embodiment of the system for electronic access control according to the invention, illustrated by way of nonlimiting example with the aid of the accompanying drawings, wherein:

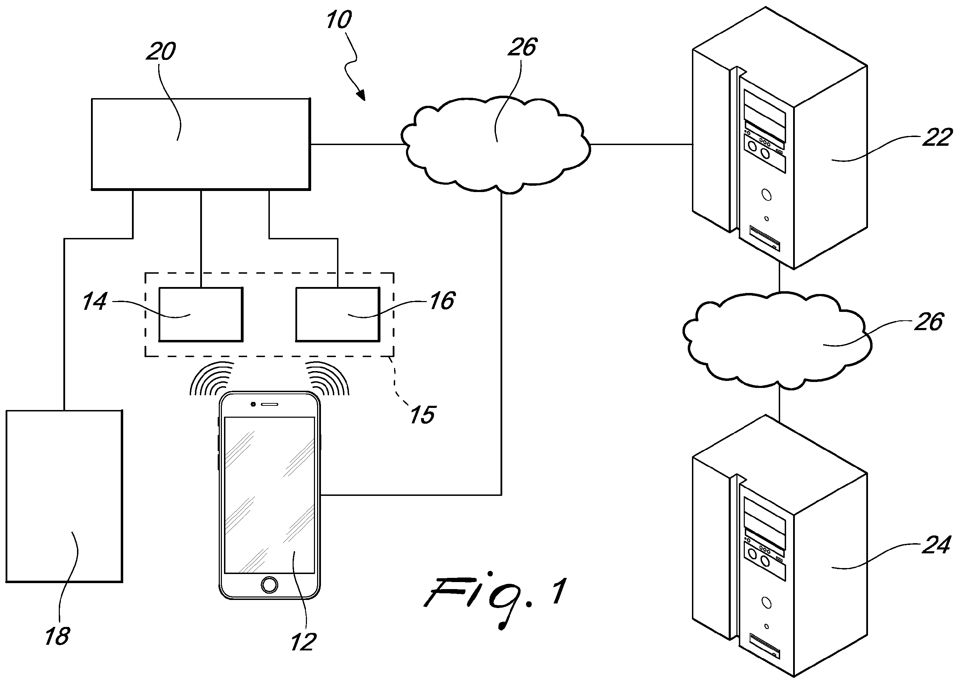

Figure 1 is a block diagram which illustrates schematically an embodiment of the system for electronic access control according to the present invention;

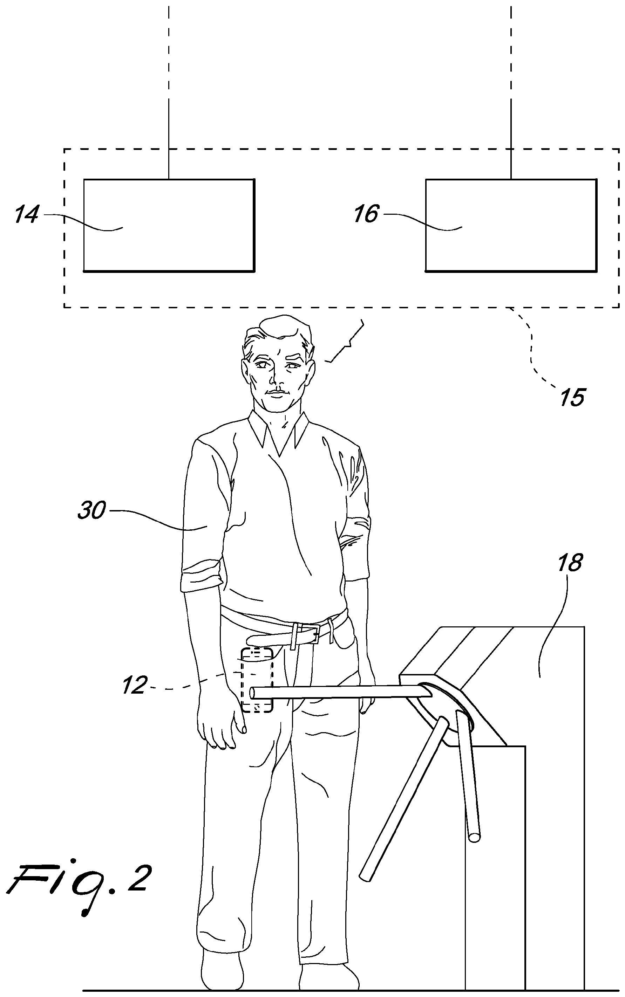

Figure 2 is a schematic front view of the barrier region, in particular a turnstile, of an embodiment of the system for electronic access control according to the present invention;

Figure 3 is a schematic top plan view of the barrier region, in particular with three lanes, of an embodiment of the system for electronic access control according to the present invention;

Figure 4 is a schematic block diagram of a first variation of the short-range wireless local receiver of an embodiment of the system for electronic access control according to the present invention;

Figure 5 is a schematic block diagram of a second variation of the short-range wireless local receiver of an embodiment of the system for electronic access control according to the present invention;

Figure 6 is a schematic block diagram of a third variation of the short-range wireless local receiver of an embodiment of the system for electronic access control according to the present invention;

Figure 7 comprises two charts which plot the radiation patterns along the horizontal plane H and along the vertical plane V, respectively, of the directional antenna A of the short-range wireless local receiver, shown in Figure 4, of an embodiment of the system for electronic access control according to the present invention;

Figure 8 comprises two charts which plot the radiation patterns along the horizontal plane H and along the vertical plane V, respectively, of the omnidirectional antenna B of the short-range wireless local receiver shown in Figures 4 and 5 of an embodiment of the system for electronic access control according to the present invention;

Figure 9 comprises two charts which plot the radiation patterns along the horizontal plane H and along the vertical plane V, respectively, of the directional antenna A of the short-range wireless local receiver, shown in Figure 5, of an embodiment of the system for electronic access control according to the present invention.

With reference to the cited figures, the system for electronic access control according to the invention, designated generally by the reference numeral 10, comprises substantially a mobile processing device 12 owned by a user 30, at least one short-range wireless local receiver 14, a barrier 18, a control unit 20, a remote coordination processing device 22, and at least one remote accreditation processing device 24.

The mobile device 12, the control unit 20 and the remote coordination device 22 are connected and communicate by means of a telematic communication network 26, such as for example the Internet. The remote coordination device 22 and the remote accreditation processing device 24 are connected and communicate by means of a telematic communication network 26, such as for example the Internet.

Advantageously, the system 10 for electronic access control further comprises at least one short-range wireless local transmitter 16.

The mobile processing device 12 of the system 10 for electronic access control according to the invention is a device with a telecommunication capability of the mobile type, such as for example a smartphone, a tablet, or a wearable device (watch or bracelet), and as mentioned it is owned and operated by the user 30.

The mobile processing device 12 is configured to receive, by means of the telematic communication network 26, the personal access credentials of the user 30 that arrive from the remote coordination device 22, which in turn has received them from the remote accreditation processing device 24.

The mobile processing device 12 is configured to send the personal access credentials of the user 30 toward the control unit 20, when the user 30 is in the vicinity of the barrier 18, for example within a radius of 0.5-1.5 m, by means of the short-range wireless local receiver 14 and therefore even in the absence of a connection to the telematic communication network 26.

In practice, the connection and communication of the mobile processing device 12 with the remote coordination device 22 and/or the remote accreditation processing device 24, by means of the telematic communication network 26, are necessary only during the step of receiving the personal access credentials of the user 30.

The mobile processing device 12 is configured to store the data of the personal access credentials related to the user 30 associated with one or more reserved services or locations, received previously from the remote coordination device 22, rendering superfluous the connection and communication with the remote coordination device 22 and/or the remote accreditation processing device 24, by means of the telematic communication network 26, during the step of access of the user 30 to the interior of a specific reserved service or location.

For this purpose, the mobile processing device 12 prizes means for storing personal access credentials related to the user 30, for example comprising one or more appropriately sized storage media.

In one embodiment of the system 10 for electronic access control according to the invention, the user 30 can operate on his/her own mobile device 12 in order to activate or deactivate the personal access credentials of a given reserved service or location, which for example he/she does not wish to use at a given time, consequently ensuring his/her own privacy.

The mobile processing device 12 is configured to establish respective communications with the short-range wireless local receiver 14 and with the optional short-range wireless local transmitter 16, by means of appropriate communication protocols. Consequently, the mobile processing device 12 is furthermore configured to establish communication with the control unit 20, in particular a communication of the indirect type, since it has the above cited receiver 14 and the above cited transmitter 16 as intermediaries.

For this purpose, in particular for communication with the short-range wireless local receiver 14 and with the optional short-range wireless local transmitter 16, the mobile processing device 12 comprises a short-range wireless communication module, preferably of the Bluetooth type, even more preferably of the BLE (Bluetooth Low Energy) type.

In one embodiment of the invention, the configuration of the mobile processing device 12 occurs by means of an app, i.e., a mobile application, which is appropriately implemented.

The barrier 18 of the system 10 for electronic access control according to the invention comprises at least one mechanical or electronic means adapted to regulate the physical admission of users to the interior of reserved services or locations and adapted to block and/or signal the intrusion of an unauthorized user into said reserved services or locations.

For example, the barrier 18 can comprise a turnstile, a bar, a gate, a door, a mass sensor, an alarmed photocell, or a video camera with intrusion prevention signaling.

In a normal situation of use of the system 10 for electronic access control according to the invention, the user 30, provided with a mobile device 12, appears in the vicinity of the barrier 18, for example within a radius of 0.5-1.5 meters, wishing to access the interior of a reserved service or location.

The control unit 20 of the system 10 for electronic access control according to the invention is adapted to control the local infrastructure of the system 10 according to the invention and consequently control the accesses of the users 30 to the reserved service or location.

In particular, the control unit 20 is configured to evaluate whether the personal access credentials of a user 30 are valid and authorized or not: in the first case, the control unit 20 allows the user 30 access through the barrier 18 (access clearance), while in the second case the control unit 20 prevents the user 30 access through the barrier 18 (access denial).

The control unit 20 is connected directly and communicates with the short-range wireless local receiver 14, the optional short-range wireless local transmitter 16, and the barrier 18; furthermore, the control unit 20 is optionally connected to and communicates with the remote coordination device 22 by means of the telematic communication network 26. Preferably, the control unit 20 is installed locally.

The control unit 20 is therefore capable of communicating with the mobile device 12 of the user 30 by means of the short-range wireless local receiver 14 and the optional short-range wireless local transmitter 16, for example to locate the location of origin of the signal emitted by the mobile device 12 of the user 30 or to receive the personal access credentials of the user 30 that arrive from the mobile device 12 of the user 30.

The control unit 20 is provided with appropriate capabilities for computing and interfacing with the other elements of the system 10 according to the invention and is configured to control, monitor and coordinate the operation of the elements of the system 10 to which it is directly connected and with which it communicates.

Furthermore, the control unit 20 is configured to perform the operations for processing the data in input from the short-range wireless local receiver 14 or in output from the short-range wireless local transmitter 16.

The short-range wireless local receiver 14 of the system 10 for electronic access control according to the invention is preferably of the Bluetooth type, even more preferably of the BLE (Bluetooth Low Energy) type. The short-range wireless local receiver 14 is connected to and communicates with the control unit 20. The short-range wireless local receiver 14 is located proximate to the barrier 18.

The short-range wireless local receiver 14 is configured to receive a signal emitted by the mobile device 12 of the user 30, in particular by the corresponding short-range wireless communication module.

The short-range wireless local receiver 14 and the control unit 20 are configured to locate the location of origin of the signal emitted by the mobile device 12 of the user 30, in particular by the corresponding short-range wireless communication module.

In greater detail, the short-range wireless local receiver 14 and the control unit 20 are configured to identify at least one location vector, preferably comprising at least the intensity, even more preferably comprising at least the intensity, orientation and direction, of the signal emitted by the mobile device 12 of the user 30, in particular by the corresponding short-range wireless communication module.

In general it is possible to identify a respective location vector for each short-range wireless local receiver 14 comprised within the system 10 according to the invention.

The location vector indicates, among other things, the probable angle of incidence of the signal emitted by the mobile device 12 of the user 30, with respect to the center of the short-range wireless local receiver 14.

In one embodiment of the system 10 for electronic access control according to the invention, the signal emitted by the mobile device 12 of the user 30 can be located by means of one or more short-range wireless local receivers 14 provided with directional antennas, which therefore react preferentially to signals that arrive from one or more preset positions.

In another embodiment of the system 10 for electronic access control according to the invention, the signal emitted by the mobile device 12 of the user 30 can be located by means of phased arrays of antennas, arrays of aperture synthesis antennas, or arrays of microstrip antennas, which are capable of determining with sufficient precision the angle of incidence of the signal in addition to its intensity.

In the embodiment of the system 10 according to the invention that comprises a single short-range wireless local receiver 14, the latter and the control unit 20 are configured to locate, by means of a location vector, the signal emitted by the mobile device 12 of the user 30 by identifying an area, within a two-dimensional grid or 2D grid, that represents the probable position of the mobile device 12 of the user 30.

In the embodiment of the system 10 according to the invention that comprises a plurality of appropriately mutually spaced short-range wireless local receivers 14, said receivers and the control unit 20 are configured to locate, by means of a plurality of location vectors, the signal emitted by the mobile device 12 of the user 30 by identifying a volume, within a three-dimensional grid or 3D grid, which represents the probable position of the mobile device 12 of the user 30, in which the location vectors detected by the various short-range wireless local receivers 14 are mutually intersected.

In a preferred embodiment of the system 10 for electronic access control according to the invention, which is particularly useful and practical to distinguish a plurality of users arranged on a plurality of rows along a plurality of lanes, the short-range wireless local receiver 14 comprises at least one directional antenna A 32 at least one omnidirectional antenna B 34, i.e., a pair of receiving antennas which have two mutually different radiation patterns, so that the comparison, in particular the difference, between the respective absolute values of RSSI (Received Signal Strength Indication) of the same signal emitted by the short-range wireless communication module U of the mobile processing device 12 and received by the two antennas, the directional antenna A 32 and the omnidirectional antenna B 34, indicates in practice whether the user 30 is located or not in a detection region R 28. In particular, the position, shape and dimension of the detection region R 28 of the user 30 are defined by the physical construction of the two antennas, the directional antenna A 32 and the omnidirectional antenna B 34.

The ideal detection region R 28 is a region which, despite covering on the vertical plane V the entire height of the user 30 or at least of his/her torso, on the horizontal plane H is instead limited in order to prevent two users 30 in a queue from being within the same volume. Preferably, the short-range wireless local receiver 14 does not have such dimensions as to constitute a significant hindrance to passage in order to be able to maintain the dimensions of the lane as small as possible.

The absolute value of RSSI detected separately on each one of the two antennas, the directional antenna A 32 and the omnidirectional antenna B 34, is difficult if not impossible to interpret precisely to locate a short-range wireless communication module U of the mobile processing device 12 to under 2 meters in diameter except, as mentioned, with a voluntary gesture on the part of the user 30, for example by resting the mobile processing device 12 directly on the directional antenna A 32 and the omnidirectional antenna B 34, this causing the intensity of the signal received by them to increase exponentially. This is due to the fact that the intensity of the signal at the origin, minus a margin of uncertainty, is unknown, and most of all the obstacles, which cause attenuations, encountered by the signal during propagation from the short-range wireless communication module U of the mobile processing device 12 toward the directional antenna A 32 and the omnidirectional antenna B 34 are not known.

In detail, the proposed solution creates, on the short-range wireless local receiver 14, a useful overlap of the fields of the directional antenna A 32 and of the omnidirectional antenna B 34, so that there is a detection region R 28 in which the reception sensitivity between the two antennas, the directional antenna A 32 and the omnidirectional antenna B 34, is significantly different by construction.

The comparison, in particular the difference, between the respective absolute values of RSSI of the same signal emitted by the short-range wireless communication module U of the mobile processing device 12 and received simultaneously by the directional antenna A 32 and the omnidirectional antenna B 34 allows to identify at least one location vector of the signal emitted by the short-range wireless communication module U of the mobile processing device 12, determining assuredly whether the mobile processing device 12, and therefore the user 30, is located or not in the detection region R 28, if RSSI (A)-RSSI(B), expressed in dB, is higher than, equal to or lower than a predefined threshold defined only by the design characteristics, i.e., by the construction parameters, of the directional antenna A 32 and the omnidirectional antenna B 34.

By using the relative intensity RSSI(A)-RSSI(B), in fact all the differences due to the uncertainty of the intensity of the signal in emission and of the attenuation of the signal in propagation are in practice eliminated, assuming that the attenuations of the signal U->A along its path are comparable with those of the signal U->B along its path. For this reason, the directional antenna A 32 and the omnidirectional antenna B 34 are arranged close to each other.

If TXI(U) is the real intensity of signal transmission, PLS(U->A) is the propagation loss between the short-range wireless communication module U and the directional antenna A 32, and likewise PLS(U->B) is the propagation loss between the short-range wireless communication module U and the omnidirectional antenna B 34, GA($\theta,\varphi$) and GB($\theta\varphi$) are the respective gains of the directional antenna A 32 and the omnidirectional antenna B 34 for a short-range wireless communication module U arranged in line with the polar coordinates ($\theta,\varphi$) one can write:

$$RSSI(A)=TXI(U)-PLS(U\text{->}A)+GA(\theta,\varphi)$$

$$RSSI(B)=TXI(U)-PLS(U\text{->}B)+GB(\theta,\varphi)$$

therefore RSSI(A)-RSSI(B)=GA($\theta,\varphi$)-GB($\theta,\varphi$), which depend only and exclusively on the construction parameters of the directional antenna A 32 and the omnidirectional antenna B 34, providing that the propagation loss PLS(U->A) is comparable with the propagation loss PLS(U->B).

With this method, therefore, all the uncertainties due to unknown and variable quantities TXI(U), PLS(U->A) and PLS(U->B) are eliminated.

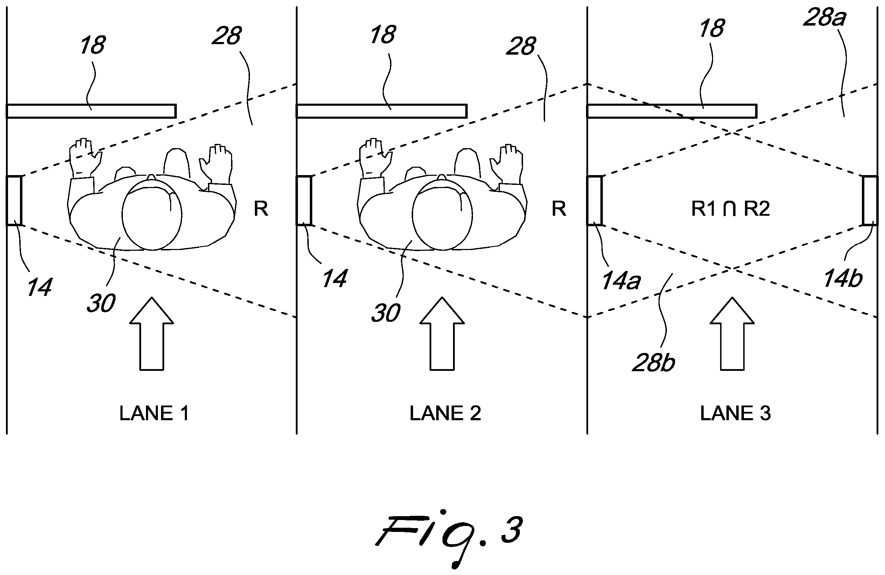

Advantageously, where necessary, at least two short-range wireless local receivers 14a and 14b can be arranged mutually opposite for each lane, so as to detect the presence of the user 30 only and exclusively in the region of intersection R1∩R2 between the two detection regions R1 28a and R2 28b (see Figure 3, in particular lane 3), i.e., only and exclusively when both short-range wireless local receivers 14a and 14b simultaneously detect the presence of the mobile processing device 12, and therefore of the user 30, in their respective detection region R1 28a and R2 28b. This allows to avoid any possible source of error in detecting the presence of a user 30 in a lane. For example, the short-range wireless local receiver 14 of lane 1 might identify incorrectly a user 30 located in lane 2 as being present in its own lane 1.

In general, in order to avoid having excessive space occupations, the technology used within the present invention to provide the two antennas, the directional antenna A 32 and the omnidirectional antenna B 34, is the patch antenna technology that is well known in the literature, which due to its physical characteristics is very compact, since it is planar and can be provided on a printed circuit and has almost complete shielding in the rear part, facilitating the task of distinguishing a user in front of the antenna but ignoring one located behind it.

The directional antenna A 32 and the omnidirectional antenna B 34 are connected to two independent receivers, preferably of the Bluetooth type, even more preferably of the BLE type, which are connected to the control unit 20, which is configured to process the received signals together with their RSSI. The short-range wireless local receiver 14 and the control unit 20 are therefore configured to identify at least one location vector of the signal emitted by the short-range wireless communication module of the mobile processing device 12, calculating the difference between RSSI(A) and RSSI(B) and to evaluate whether their difference is greater than, equal to or lower than a predetermined threshold, consequently signaling whether the mobile processing device 12, and therefore the user 30, is located or not in the detection region R 28.

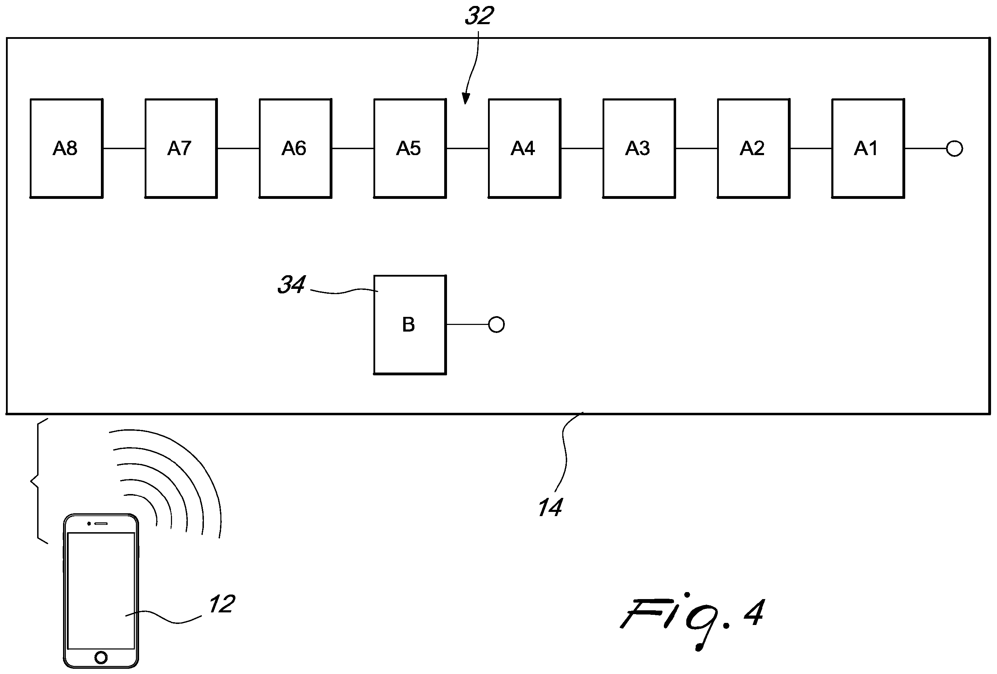

With particular reference to Figure 4, in a first variation of the short-range wireless local receiver 14, the directional antenna A 32 is a fan beam antenna which covers indicatively 180° (or less) on the vertical plane V but usefully, for example, only 40° on the horizontal plane H, while the omnidirectional antenna B 34 is an antenna that covers indicatively 180° (or less) both on the horizontal plane H and on the vertical plane V.

The detection region R 28 coincides with the main lobe of the directional antenna A 32, thus forming what is known in RFID applications as a gate antenna.

In order to obtain a directional antenna A 32 of the fan beam type by means of patch antennas it is necessary to create an array of antennas, so that the directional antenna A 32 in practice is composed of an array of radiating elements A1...An connected to the same receiver, according to methods known in the literature. The number of radiating elements, the position and their individual characteristics of phase and intensity of the signal allow to obtain antennas with arbitrary radiation patterns and to usefully suppress the lateral lobes. Specifically, a directional antenna A 32 of the fan beam type with the desired characteristics can be obtained by means of a linear array of elements, so as to maintain a wide emission on the vertical plane V (180° or less) but a reduced one, therefore with high gain, on the horizontal plane H (for example 40°).

The angles of the beam, and consequently the gain of the fan beam antenna, depend on the number of elements used and therefore become useful as the extension of the antenna increases, obtaining a higher gain and a smaller angle. Advantageously, a fan beam antenna with a linear array of approximately 8-10 elements is particularly suitable to achieve the intended aim.

However, the dimensions of this structure are not very small, since due to physical reasons the individual elements have a size of approximately $\lambda g/2$ (approximately 40 millimeters), and the individual elements must be spaced by approximately $\lambda g$ (approximately 80 millimeters) in order to be considered independent radiating elements in a parallel or corporate feeding, and exactly $\lambda g$ in the case of collinear feeding, as shown in Figure 4 in order to obtain a uniform phasing on all the elements and therefore a symmetrical beam without excessive lateral lobes.

The guided wavelength $\lambda g$ is the guided wavelength on the dielectric material that constitutes the substrate of the antenna, which therefore depends on the dielectric constant $\varepsilon r$ of the material, which normally does not exceed the value of 2.2 in order to avoid excessive bandwidth narrowing. Methods and theory are widely available in the literature.

The omnidirectional antenna B 34 instead can be provided usefully by means of a single low-gain patch antenna element, obtaining a front radiation that is uniform on the horizontal plane H and on the vertical plane V.

It is essential that the directional antenna A 32 and the omnidirectional antenna B 34 are arranged in the immediate vicinity so as to be able to assume that the propagation path and the attenuations of the signal PLS(U->A) and PLS(U->B) can be mutually compared. This assumption unfortunately becomes weaker as the dimensions of A increase.

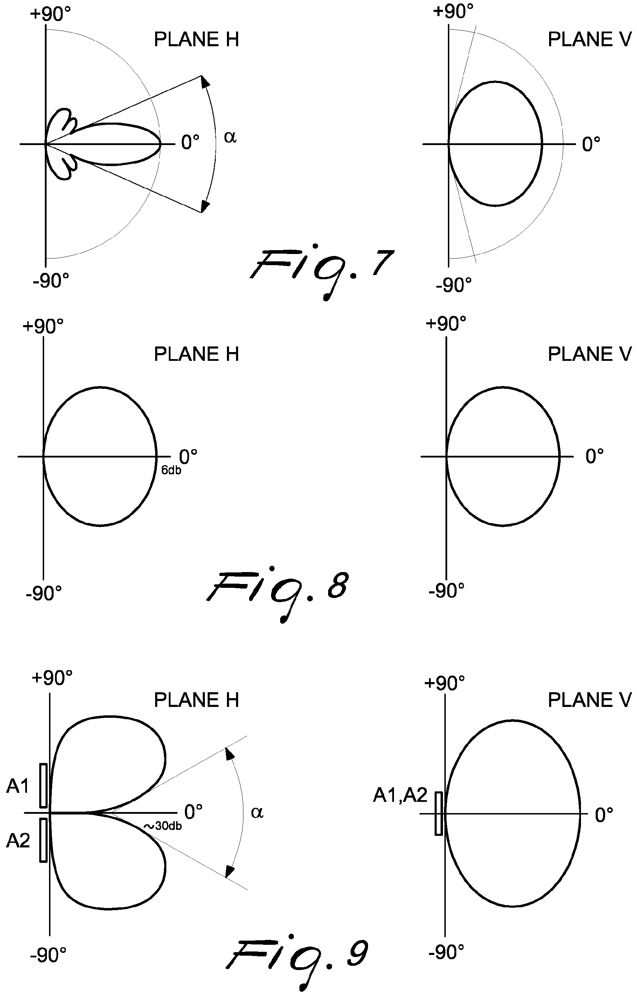

As can be deduced from a comparison between Figure 7 (PLANE H) and Figure 8 (PLANE H), the detection region R 28 is the region in which the directional antenna A 32 has a higher gain than the omnidirectional antenna B 34 and is therefore limited in practice to the angle $\alpha$ of the main lobe of the directional antenna A 32, where the gain is significantly higher.

Normally, antenna arrays are used to create high-gain directive beams. For this purpose, as described above, it is necessary to use a large number of elements which are appropriately mutually phased (normally with phase parity at 0°). Uniform phasing allows to obtain a symmetrical beam that has maximum efficiency and gain. Phasings set with a phase delta between one element and the other allow all known beam steering methods by tilting by a preset angle the lobe of maximum gain of the antenna.

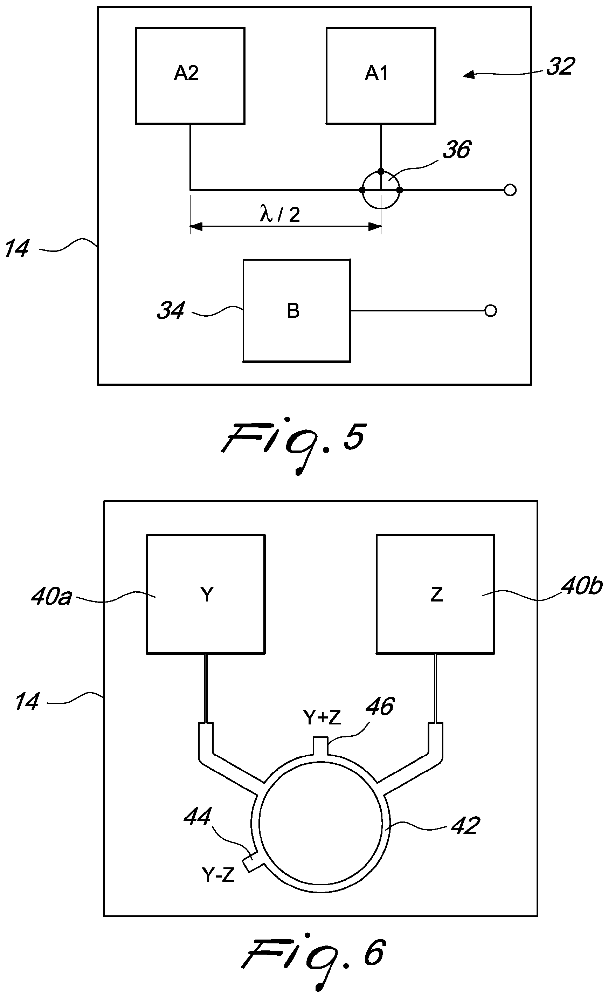

With particular reference to Figure 5, in a second variation of the short-range wireless local receiver 14, the directional antenna A 32 is a fan beam antenna which comprises an array of antennas constituted by two patch radiating elements A1 and A2, which are mutually spaced by approximately $\lambda g$ and are fed with a phase difference of exactly 180°. Normally this configuration is not used for signal propagation, since it is an antenna that "eats" its own emission. However, within the scope of the present invention this configuration turns out to be perfect, since it creates a radiation "hole" with a depth of approximately 30 dB in the central position with an angle $\alpha$ that is usefully narrow (the locus of the points that are equidistant from A1 and A2), while reception is allowed on the two lateral lobes that are emitted laterally.

By using an omnidirectional patch antenna B 34 as in the first variation described above, the calculation unit 20 is configured to determine with certainty whether the mobile processing device 12, and therefore the user 30, is located in or not in the detection region R 28, which coincides with the radiation "hole" of the directional antenna A 32, calculating the difference between RSSI(B) and RSSI(A) and checking whether their difference is greater than, equal to, or smaller than a predetermined threshold.

The phasing difference between A1 and A2 can be provided for example by joining the two elements A1 and A2 on a single receiver with a coupler or splitter 36, taking care to arrange the connecting conductors so that the path

difference is exactly $\lambda/2$.

In this configuration, the coupler 36 performs a mathematical vector operation, returning the signal A=A1-A2 to the receiver.

By reducing the overall dimensions of the directional antenna A 32, PLS(U->A) and PLS(U-B) are more similar to each other since they are arranged in the immediate vicinity and have comparable dimensions.

With particular reference to Figure 6, in a third variation of the short-range wireless local receiver 14, the directional antenna A 32 and the omnidirectional antenna B 34 are constituted by just two patch radiating elements Y 40a and Z 40b, which are mutually spaced by approximately $\lambda$g. In the preferred implementation (other circuit solutions are possible), a hybrid ring coupler 42 (also known as rat race coupler) is arranged as a connecting element between the two patch radiating elements Y 40a and Z 40b.

The hybrid ring coupler 42 comprises four gates which combine the signals according to the arithmetic vector operations shown in Figure 6.

In particular, a first receiver, preferably of the Bluetooth type, even more preferably of the BLE type, arranged at the Y-Z gate 44 of the hybrid ring coupler 42, sees exactly the signal of Y-Z (i.e., a 180° phase shift), implementing the directional antenna A 32 of the second variation described above.

A second receiver, also preferably of the Bluetooth type, even more preferably of the BLE type, arranged at the Y+Z gate 46 of the hybrid ring coupler 42, sees exactly the signal of Y+Z, implementing the frontally omnidirectional antenna B 34 of the preceding variations, using the same patch radiating elements Y 40a and Z 40b.

In practice, an array of two radiating elements supplied with the same phase is constituted, having characteristics which are substantially equivalent to those of a single radiating element (the radiation angle on the horizontal plane H is reduced slightly and gain is increased slightly).

For geometric reasons - the patch radiating elements Y 40a and Z 40b are in fact the same and are shared by the two receiving antennas A 32 and B 34 - it is evident that the perturbations and attenuations of the propagation of the signal between the short-range wireless communication module U of the mobile processing device 12 and the receiving antennas A 32 and B 34 are the same (PLS(U->A)==PLS(U->B)) and therefore cancel each other exactly, calculating RSSI(B)-RSSI(A), thus ensuring maximum precision in the identification of the mobile processing device 12 and therefore of the user 30 in the detection region R 28.

Advantageously, the distance between the patch radiating elements Y 40a and Z 40b, which is nominally equal to one wavelength, can be changed in order to obtain a greater or smaller angle of aperture of the detection region R,depending on the design requirements.

Once the presence of the user 30 in the vicinity of the barrier 18, for example within a radius of 0.5-1.5 meters, has been checked, knowing the position of his/her mobile device 12 by means of the location vector, the control unit 20 can authorize access of the user 30 to the interior of the reserved location or service.

The optional short-range wireless local transmitter 16 of the system 10 for electronic access control according to the invention is preferably of the Bluetooth type, even more preferably of the BLE (Bluetooth Low Energy) type, for example Beacon.

The short-range wireless local transmitter 16 is connected to and communicates with the control unit 20. The short-range wireless local transmitter 16 is arranged proximate to the barrier 18.

The short-range wireless local transmitter 16 is configured to emit periodically a signal that can be received by the mobile device 12 of the user 30, in particular by the related short-range wireless communication module.

The short-range wireless local transmitter 16 and the control unit 20 are configured to announce to the mobile device 12 of the user 30 the availability of a system for electronic access control related to a specific reserved service or location within the coverage area of the signal emitted by the short-range wireless local transmitter 16.

In one embodiment of the invention, the system 10 for electronic access control comprises a short-range wireless local transceiver 15, which comprises both the short-range wireless local receiver 14 and the short-range wireless local transmitter 16, which therefore are comprised in a same electronic device or apparatus.

In an embodiment of the system 10 for electronic access control according to the invention, the control unit 20 is furthermore configured to signal to the mobile device 12 to update the personal access credentials of the user 30, this signal being sent by means of the short-range wireless local transmitter 16.

The barrier 18, the short-range wireless local receiver 14 and the short-range wireless local transmitter 16 are part of the local infrastructure of the system 10 for electronic access control according to the invention.

The remote coordination processing device 22 of the system 10 for electronic access control according to the invention is a device of the server type, preferably a Web server, with a telecommunication capability preferably of the wired type, and is configured to act as an intermediary between the mobile processing device 12 of the user 30, the control unit 20, and the remote accreditation processing device 24.

Among other things, the remote coordination device 22 is configured to receive, by means of the telematic communication network 26, the authorizations of the user 30, i.e., his/her personal access credentials, which arrive from the remote accreditation device 24. The remote coordination device 22 is configured to forward subsequently these authorizations, i.e., these personal access credentials, to the mobile device 12 of the user 30 to whom these authorizations have been issued.

In one embodiment of the system 10 for electronic access control according to the invention, the control unit 20 is furthermore configured to signal to the mobile device 12 to update the personal access credentials of the user 30, this signal being sent by means of the remote coordination device 22.

In an embodiment of the system 10 for electronic access control according to the invention, upon activation of the account, the remote coordination device 22 is configured to send to the mobile device 12 of the user 30 one or more cryptographic keys, for the mutual certification of the identities of the subjects or objects involved, for example by means of known methods for digital signing, secure communication and cryptographic key exchange.

The remote accreditation processing device 24 of the system 10 for electronic access control according to the invention is a device of the server type, preferably a Web server, with a telecommunication capability preferably of the wired type, and is configured to issue the authorizations, i.e., the personal access credentials, related to a reserved service or location and intended for a user 30, in particular to the mobile device that he/she owns.

In one embodiment of the invention, the system 10 for electronic access control comprises a plurality of remote accreditation devices 24, one for each reserved service or location the accesses of which are controlled and managed by the system 10 according to the invention.

The remote coordination device 22 and/or the remote accreditation device 24 identify the user 30 by means of one or more unique identification elements associated with the user 30.

In a preferred embodiment of the system 10 for electronic access control according to the invention, the remote coordination device 22 and/or the remote accreditation device 24 identify the user 30 by means of the telephone number of the mobile device 12 of the user 30, in particular by means of the telephone number that corresponds to the SIM card that is comprised in the mobile device 12 of the user 30.

Advantageously, if the user 30 is identified by means of his/her own telephone number, the remote coordination device 22 is configured to send, for verification, an SMS toward the mobile device 12 that has the specified telephone number. This SMS can be recognized automatically by the mobile device 12 of the user 30 or can bear a code or password for verification, to be used only once to activate the account on the remote coordination device 22.

Advantageously, again in the case in which the user 30 is identified by means of his/her own telephone number, the mobile device 12 of the user 30 is configured to check periodically that the telephone number has remained unchanged since account activation and to suspend the personal access credentials stored in the mobile device 12 if a change has occurred.

In an alternative embodiment of the system 10 for electronic access control according to the invention, the remote coordination device 22 and/or the remote accreditation device 24 can identify the user 30 by means of: name and surname, user name, email address and password, credentials of a social network, a personalized or shared secret symmetric cryptographic key, or a pair of customized or shared public/private asymmetric cryptographic keys.

In one embodiment of the system 10 for electronic access control according to the invention, the control unit 20 and the remote processing devices 22 and 24 can be comprised and installed on a single physical apparatus.

The operation of a preferred embodiment of the system 10 for electronic access control according to the invention is described hereinafter.

The short-range wireless local transmitter 16, preferably of the BLE type, located proximate to the barrier 18, periodically emits a signal that announces the availability of a system for electronic access control related to a specific reserved service or location.

Advantageously, the short-range wireless local transmitter 16, preferably of the BLE type, also emits periodically a signal which bears a message that is random and variable over time, to be used in subsequent "challenge" authentication procedures.

If the specific reserved service or location is among the ones associated with the personal access credentials of the user 30 stored in his/her mobile device 12, the mobile device 12 reacts to the signals of the short-range wireless local transmitter 16 and is activated.

The mobile device 12 of the user 30 selects the personal access credentials of the user 30 related to the specific reserved service or location and then emits continuously and periodically a signal which bears a message the payload (useful part of the message) of which comprises the previously selected personal access credentials of the user 30.

Advantageously, the payload of said message also comprises the random message that originates from the short-range wireless local transmitter 16 and was previously received by the mobile device 12 of the user 30.

Advantageously, the personal access credentials of the user 30 can be encrypted by means of a pre-shared secret key, obtained by means of the remote coordination device 22.

Advantageously, the message comprises the personal access credentials of the user 30 and can be divided into a plurality of partial messages, each of which bears at least one index (for example message **1, 2,** 3, ..., n) and a fixed or temporary unique identifier of the mobile device 12 of the user 30 (for example the MAC address of the short-range wireless communication module, or a random code).

The short-range wireless local receiver 14, preferably of the BLE type, located proximate to the barrier 18, receives the signal emitted continuously and periodically by the mobile device 12 of the user 30.

The control unit 20, by means of the short-range wireless local receiver 14, receives the message that comprises the personal access credentials of the user 30, optionally sorting the plurality of partial messages into which the message has been divided previously, this sorting being based on the index of the partial messages and on the unique identifier of the mobile device 12.

The message, comprising the personal access credentials of the user 30 and arriving from the mobile device 12 of the user 30, is analyzed by the control unit 20 to identify a location vector, which preferably comprises at least intensity, orientation and direction, of the signal emitted by the mobile device 12 of the user 30, increasing the accuracy of the location as the number of partial messages received increases.

When the user 30, in particular his/her mobile device 12, is located in the vicinity of the barrier 18, for example within a radius of 0.5-1.5 meters, the control unit 20 assesses whether the personal access credentials of the user 30 are valid and authorized or not: in the first case, the control unit 20 allows the user 30 access through the barrier 18 (access clearance), whereas in the second case the control unit 20 prevents the user 30 access through the barrier 18 (access denial).

Advantageously, in the instants that precede or follow access clearance, the control unit 20 can signal to the mobile device 12 to update the personal access credentials of the user 30, for example decreasing by one unit the number of accesses to the specific reserved service or location that are still available, or setting a new date and/or new time of expiration of the authorization, this signal being sent by means of the short-range wireless local transmitter 16 or by means of the remote coordination device 22.

In practice it has been found that the invention fully achieves the intended aim and objects. In particular it has been shown that the system for electronic access control thus conceived allows to overcome the qualitative limitations of the background art, since it allows to acquire the personal access credentials of a user from the mobile processing device that he/she owns, allowing (or preventing) access to the user without requiring his/her intervention and without using any physical identification medium, in short, without interactions.

One advantage of the system for electronic access control according to the present invention resides in that it allows automatically and reliably to distinguish the user at a barrier from the other users in his/her vicinity, allowing (or preventing) access only to the user at the barrier.

Another advantage of the system for electronic access control according to the present invention resides in that it allows to verify the personal access credentials without the user having to perform operations at the moment of transit through the barrier, simply by carrying with him/her his/her own mobile processing device, such as for example a smartphone, a tablet, or a wearable device (watch or bracelet) provided with connectivity.

A further advantage of the system for electronic access control according to the present invention resides in that it allows (or prevents) access to the user even in the absence of a connection to a telematic communication network, such as for example the Internet.

Another advantage of the system for electronic access control according to the present invention resides in that it allows to distinguish a plurality of users arranged in a plurality of queues along a plurality of lanes, a situation which occurs often for example in accesses to subways, sports facilities, museums, movie theaters, and so forth.

Furthermore, one advantage of the system for electronic access control according to the present invention resides in that it is easy to use, especially in the field of ticketing services that are open to the public, overcoming any technological and/or statutory limitations.

Although the system for electronic access control according to the invention has been conceived in particular to control and manage accesses (or admissions) of a more or less large number of users into services or locations which are reserved or in any case with conditional access, it can in any case be used more generally for the control and management of accesses of users to the interior of any type of service or location, both with conditional access and with free access.

The invention thus conceived is susceptible of numerous modifications and variations, all of which are within the scope of the appended claims. All the details may furthermore be replaced with other technically equivalent elements.

**In** practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A system (10) for electronic access control, comprising a mobile processing device (12) owned by a user (30), a barrier (18), a control unit (20), and a remote coordination processing device (22), said mobile processing device (12) comprising means for storing personal access credentials related to said user (30) and a short-range wireless communication module, said mobile processing device (12), said control unit (20) and said remote coordination device (22) being connected by means of a telematic communication network (26), wherein it further comprises at least one short-range wireless local receiver (14), which is connected to said control unit (20) and is arranged proximate to said barrier (18), said short-range wireless local receiver (14) and said control unit (20) being configured to define at least one vector for the location of a signal emitted by said short-range wireless communication module of said mobile processing device (12), said signal comprising said personal access credentials of said user (30), said location vector comprising at least intensity, orientation and direction, said short-range wireless local receiver (14) comprises at least one directional antenna (32) and at least one omnidirectional antenna (34), which are arranged in immediate vicinity from each other, and have two mutually different radiation patterns, said short-range wireless local receiver (14) and said control unit (20) being configured to identify said location vector by calculating the difference between respective absolute values of RSSI, Received Signal Strength Indication, of said signal emitted by said short-range wireless communication module of said mobile processing device (12) and received by said directional antenna A (32) and said omnidirectional antenna B (34), and to evaluate whether said difference is greater than, equal to, or lower than a preset threshold, consequently signaling whether the mobile processing device (12), and therefore the user (30), is located or not in a detection region.

2. The system (10) for electronic access control according to claim 1, **characterized in that** said short-range wireless local receiver (14) is of the BLE Bluetooth Low Energy type.

3. The system (10) for electronic access control according to any one of the preceding claims, **characterized in that** it further comprises at least one short-range wireless local transmitter (16), which is connected to said control unit (20) and is arranged proximate to said barrier (18), said short-range wireless local transmitter (16) and said control unit (20) being configured to announce to said mobile device (12) the availability of said system for electronic access control (10).

4. The system (10) for electronic access control according to claim 3, **characterized in that** said short-range wireless local transmitter (16) is of the BLE Bluetooth Low Energy type.

5. The system (10) for electronic access control according to any one of the preceding claims, **characterized in that** it further comprises at least one remote accreditation processing device (24), said remote coordination device (22) and said remote accreditation processing device (24) being connected by means of said telematic communication network (26).

6. The system (10) for electronic access control according to claim 5, **characterized in that** said remote coordination processing device (22) and/or the remote accreditation processing device (24) identify said user (30) by means of the telephone number of said mobile processing device (12).

7. The system (10) for electronic access control according to any one of claims 3 and 4, **characterized in that** said control unit (20) is further configured to signal to said mobile processing device (12) to update said personal access credentials of said user (30) by means of said short-range wireless local transmitter (16).

8. The system (10) for electronic access control according to any one of the preceding claims, **characterized in that** said control unit (20) is further configured to signal to said mobile processing device (12) to update said personal access credentials of said user (30), by means of said remote coordination processing device (22).

9. The system (10) for electronic access control according to any one of the preceding claims, **characterized in that** said mobile processing device (12) of said user (30) comprises a smartphone, a tablet, or a wearable device.

10. The system (10) for electronic access control according to any one of the preceding claims, **characterized in that** said barrier (18) comprises at least one mechanical or electronic means selected from the group constituted by a turnstile; a bar; a gate; a door; a mass sensor; an alarmed photocell; and a video camera with intrusion prevention signaling.

**Patentansprüche**

1. Ein System (10) zur elektronischen Zugangskontrolle, das Folgendes umfasst: eine mobile Verarbeitungsvorrichtung (12), die einem Benutzer (30) gehört, eine Barriere (18), eine Steuerungseinheit (20) und eine Fernkoordinierungs-

EP 3 555 867 B1

Verarbeitungsvorrichtung (22), wobei die mobile Verarbeitungsvorrichtung (12) Mittel zum Speichern persönlicher Zugangsdaten, die den Benutzer (30) betreffen, und ein kabelloses Nahbereichs-Kommunikationsmodul umfasst, wobei die mobile Verarbeitungsvorrichtung (12), die Steuerungseinheit (20) und die Fernkoordinierungs-Verarbeitungsvorrichtung (22) über ein telematisches Kommunikationsnetz (26) verbunden sind; wobei es weiter mindestens einen kabellosen lokalen Nahbereichs-Empfänger (14) umfasst, welcher mit der Steuerungseinheit (20) verbunden und in der Nähe der Barriere (18) angeordnet ist, wobei der kabellose lokale Nahbereichs-Empfänger (14) und die Steuerungseinheit (20) konfiguriert sind, um mindestens einen Vektor für den Ort eines Signals zu bestimmen, das von dem kabellosen Nahbereichs-Kommunikationsmodul der mobilen Verarbeitungsvorrichtung (12) ausgesendet wird, wobei das Signal die persönlichen Zugangsdaten des Benutzers (30) umfasst; wobei der Ortsvektor zumindest Intensität, Ausrichtung und Richtung umfasst; der kabellose lokale Nahbereichs-Empfänger (14) umfasst mindestens eine Richtantenne (32) und mindestens eine Rundstrahlantenne (34), die unmittelbar benachbart angeordnet sind und zwei voneinander verschiedene Strahlungscharakteristika haben, wobei der kabellose lokale Nahbereichs-Empfänger (14) und die Steuerungseinheit (20) konfiguriert sind, um den Ortsvektor zu bestimmen durch Berechnung der Differenz zwischen den jeweiligen Absolutwerten von RSSI, Received Signal Strength Indication, des Signals, das von dem kabellosen Nahbereichs-Kommunikationsmodul der mobilen Verarbeitungsvorrichtung (12) ausgesendet und von der Richtantenne A (32) und der Rundstrahlantenne B (34) empfangen wird, und um zu bewerten, ob die Differenz größer als, gleich oder kleiner als einem vordefinierten Schwellenwert ist, und folglich zu signalisieren, ob die mobile Verarbeitungsvorrichtung (12), und somit der Benutzer (30), sich in einem Erfassungsbereich befindet oder nicht.

2. Das System (10) zur elektronischen Zugangskontrolle gemäß Anspruch 1, **dadurch gekennzeichnet, dass** der kabellose lokale Nahbereichs-Empfänger (14) vom BLE-, Bluetooth Low Energy-, Typ ist.

3. Das System (10) zur elektronischen Zugangskontrolle gemäß einem beliebigen der obigen Ansprüche, **dadurch gekennzeichnet, dass** es weiter mindestens einen kabellosen lokalen Nahbereichs-Sender (16) umfasst, der mit der Steuerungseinheit (20) verbunden und in der Nähe der Barriere (18) angeordnet ist, wobei der kabellose lokale Nahbereichs-Sender (16) und die Steuerungseinheit (20) konfiguriert sind, um der mobilen Vorrichtung (12) die Verfügbarkeit des Systems zur elektronischen Zugangskontrolle (10) zu melden.

4. Das System (10) zur elektronischen Zugangskontrolle gemäß Anspruch 3, **dadurch gekennzeichnet, dass** der kabellose lokale Nahbereichs-Sender (16) vom BLE-, Bluetooth Low Energy-, Typ ist.

5. Das System (10) zur elektronischen Zugangskontrolle gemäß einem beliebigen der obigen Ansprüche, **dadurch gekennzeichnet, dass** es weiter mindestens eine Fernakkreditierungsverfahren-Vorrichtung (24) umfasst, wobei die Fernkoordinierungs-Vorrichtung (22) und die Fernakkreditierungs-Vorrichtung (24) über das telematische Kommunikationsnetz (26) verbunden sind.

6. Das System (10) zur elektronischen Zugangskontrolle gemäß Anspruch 5, **dadurch gekennzeichnet, dass** die Fernkoordinierungs-Verarbeitungsvorrichtung (22) und/oder die Fernakkreditierungsverfahren-Vorrichtung (24) den Benutzer (30) über die Telefonnummer der mobilen Verarbeitungsvorrichtung (12) identifizieren.

7. Das System (10) zur elektronischen Zugangskontrolle gemäß einem beliebigen der Ansprüche 3 und 4, **dadurch gekennzeichnet, dass** die Steuerungseinheit (20) weiter konfiguriert ist, um der mobilen Verarbeitungsvorrichtung (12) zu signalisieren, die persönlichen Zugangsdaten des Benutzers (30) mit Hilfe des kabellosen lokalen Nahbereich-Senders (16) zu aktualisieren.

8. Das System (10) zur elektronischen Zugangskontrolle gemäß einem beliebigen der obigen Ansprüche, **dadurch gekennzeichnet, dass** die Steuerungseinheit (20) weiter konfiguriert ist, um der mobilen Verarbeitungsvorrichtung (12) zu signalisieren, die persönlichen Zugangsdaten des Benutzers (30) mit Hilfe der Fernkoordinierungs-Verarbeitungsvorrichtung (22) zu aktualisieren.

9. Das System (10) zur elektronischen Zugangskontrolle gemäß einem beliebigen der obigen Ansprüche, **dadurch gekennzeichnet, dass** die mobile Verarbeitungsvorrichtung (12) des Benutzers (30) ein Smartphone, ein Tablet oder ein tragbares Gerät umfasst.

10. Das System (10) zur elektronischen Zugangskontrolle gemäß einem beliebigen der obigen Ansprüche, **dadurch gekennzeichnet, dass** die Barriere (18) mindestens ein mechanisches oder elektronisches Mittel umfasst, gewählt aus der Gruppe bestehend aus einem Drehkreuz, einer Schranke, einem Tor, einer Tür, einem Massensensor, einer alarmierten Fotozelle und einer Videokamera mit Intrusion Prevention-Signalisierung.

**Revendications**

1. Système (10) de contrôle d'accès électronique, comprenant un dispositif de traitement mobile (12) appartenant à un utilisateur (30), une barrière (18), une unité de contrôle (20), et un dispositif de traitement de coordination à distance (22), ledit dispositif de traitement mobile (12) comprenant des moyens pour stocker des identifiants d'accès personnels relatifs audit utilisateur (30) et un module de communication sans fil à courte portée, ledit dispositif de traitement mobile (12), ladite unité de contrôle (20) et ledit dispositif de coordination à distance (22) étant reliés au moyen d'un réseau de communication télématique (26), où il comprend en outre au moins un récepteur local sans fil à courte portée (14), qui est relié à ladite unité de contrôle (20) et est disposé à proximité de ladite barrière (18), ledit récepteur local sans fil à courte portée (14) et ladite unité de commande (20) étant configurés pour définir au moins un vecteur de localisation d'un signal émis par ledit module de communication sans fil à courte portée dudit dispositif de traitement mobile (12), ledit signal comprenant lesdits identifiants d'accès personnels dudit utilisateur (30), ledit vecteur de localisation comprenant au moins intensité, orientation et direction, ledit récepteur local sans fil à courte portée (14) comprenant au moins une antenne directionnelle (32) et au moins une antenne omnidirectionnelle (34), qui sont disposées à proximité immédiate l'une de l'autre, et présentent deux diagrammes de rayonnement mutuellement différents, ledit récepteur local sans fil à courte portée (14) et ladite unité de commande (20) étant configurés pour identifier ledit vecteur de localisation en calculant la différence entre valeurs absolues respectives de RSSI Received Signal Strength Indication, dudit signal émis par ledit module de communication sans fil à courte portée dudit dispositif de traitement mobile (12) et reçu par ladite antenne directionnelle A (32) et ladite antenne omnidirectionnelle B (34), et pour évaluer si ladite différence est supérieure, égale, ou inférieure à un seuil prédéfini, signalant ainsi si le dispositif de traitement mobile (12), et par conséquent l'utilisateur (30), se trouve ou non dans une zone de détection.

2. Système (10) de contrôle d'accès électronique selon la revendication 1, **caractérisé en ce que** ledit récepteur local sans fil à courte portée (14) est de type BLE Bluetooth Low Energy.

3. Système (10) de contrôle d'accès électronique selon l'une quelconque des revendications précédentes, **caractérisé en ce qu'**il comprend en outre au moins un émetteur local sans fil à courte portée (16), qui est connecté à ladite unité de commande (20) et est disposé à proximité de ladite barrière (18), ledit émetteur local sans fil à courte portée (16) et ladite unité de commande (20) étant configurés pour signaler audit dispositif mobile (12) la disponibilité dudit système de contrôle d'accès électronique (10).

4. Système (10) de contrôle d'accès électronique selon la revendication 3, **caractérisé en ce que** ledit émetteur local sans fil à courte portée (16) est du type BLE Bluetooth Low Energy.

5. Système (10) de contrôle d'accès électronique selon l'une quelconque des revendications précédentes, **caractérisé en ce qu'**il comprend en outre au moins un dispositif de traitement d'accréditation à distance (24), ledit dispositif de coordination à distance (22) et ledit dispositif de traitement d'accréditation à distance (24) étant connectés au moyen dudit réseau de communication télématique (26).

6. Système (10) de contrôle d'accès électronique selon la revendication 5, **caractérisé en ce que** ledit dispositif de traitement de coordination à distance (22) et/ou ledit dispositif de traitement d'accréditation à distance (24) identifient ledit utilisateur (30) au moyen du numéro de téléphone dudit dispositif de traitement mobile (12).

7. Système (10) de contrôle d'accès électronique selon l'une quelconque des revendications 3 et 4, **caractérisé en ce que** ladite unité de contrôle (20) est en outre configurée pour signaler audit dispositif de traitement mobile (12) de mettre à jour lesdits identifiants d'accès personnels dudit utilisateur (30) au moyen dudit émetteur local sans fil à courte portée (16).

8. Système (10) de contrôle d'accès électronique selon l'une quelconque des revendications précédentes, **caractérisé en ce que** ladite unité de contrôle (20) est en outre configurée pour signaler audit dispositif de traitement mobile (12) de mettre à jour lesdits identifiants d'accès personnels dudit utilisateur (30), au moyen dudit dispositif de traitement de coordination à distance (22).

9. Système (10) de contrôle d'accès électronique selon l'une quelconque des revendications précédentes, **caractérisé**

**en ce que** ledit dispositif de traitement mobile (12) dudit utilisateur (30) comprend un smartphone, une tablette ou un dispositif portable.

10. Système (10) de contrôle d'accès électronique selon l'une quelconque des revendications précédentes, **caractérisé en ce que** ladite barrière (18) comprend au moins un moyen mécanique ou électronique choisi parmi le groupe constitué d'un tourniquet ; d'une barre ; d'un portillon ; d'une porte ; d'un capteur de masse ; d'une cellule photoélectrique avec alarme ; et d'une caméra vidéo avec signalisation de prévention d'intrusion.

Fig. 1

*Fig.2*

Fig. 3

Fig. 4

A2

A1

32

36

λ / 2

14

34 B

*Fig.5*

40a Y

Z 40b

14

Y+Z 46

44

Y-Z

42

*Fig.6*

Fig. 7

Fig. 8

Fig. 9

REFERENCES CITED IN THE DESCRIPTION

**Patent documents cited in the description**

- US 2016163137 A

- US 2016055692 A